# EUROPEAN PATENT APPLICATION

(11) **EP 3 509 352 A1**
(43) Date of publication of application: **10.07.2019**
(21) Application number: 18186861.3
(22) Date of filing: 01.08.2018
(51) Int. Cl.: H04W 40/12, H04W 40/08, H04L 12/721, H04L 12/733, H04W 40/22

(54) **NETWORK PATH SELECTION METHOD AND NETWORK NODE DEVICE USING THE SAME**

(30) Priority: 04.01.2018 TW 107100395
(71) Applicant: Arcadyan Technology Corporation, Hsinchu City 30071 (TW)
(72) Inventor: HSIEH, Tsung-Hsien, 30071 Hsinchu City (TW); LEE, Chin-Fang, 30071 Hsinchu City (TW)
(74) Representative: dompatent von Kreisler Selting Werner - Partnerschaft von Patent- und Rechtsanwälten mbB

(57) **Abstract**

A network path selection method and a network node device using the same are provided. The network path selection method is used for selecting a path connected to a mesh network from the network node device. The network path selection method includes the following steps. The network node device is connected to a gateway device via at least one first relay node device. A first communication performance of the first relay node device is measured. The network node device is connected to the gateway device via at least one second relay node device. A second communication performance of the second relay node device is measured. The network node device is selectively connected to the gateway device via the first relay node device or the second relay node device according to the first communication performance and the second communication performance.

## Description

### BACKGROUND OF THE INVENTION

### Field of the Invention

The invention relates in general to a network path selection method and a network node device using the same, and more particularly to a mesh network path selection method and a network node device using the same.

### Description of the Related Art

Along with the development in the network technology, various networking technologies are provided one after another. For example, the network connection can be done by using the Ethernet technology, the WiFi technology, the power line communication (PLC) technology, or the multimedia over coax alliance (MoCA) technology using coaxial cable. Each networking technology has its applicable environment and transmission efficiency. Therefore, a mesh network architecture including different networking technologies is provided.

Since the mesh network architecture is very complicated, the user will find it difficult to select a best networking method. Therefore, it has become a prominent task for the industries to provide a method to automatically select the best networking method.

### SUMMARY OF THE INVENTION

The invention is directed to a network path selection method and a network node device using the same capable of automatically selecting the best networking method according to the measurement results of communication performance.

According to one embodiment of the present invention, a network path selection method is provided. The network path selection method is used for selecting a path connected to a mesh network from a network node device. The network path selection method includes the following steps. A network node device is connected to a gateway device via at least one first relay node device. The network node device and the first relay node device are connected via a first transmission path, and the first relay node device and the gateway device are connected via a second transmission path. A first communication performance of the first relay node device is measured. The network node device is connected to the gateway device via at least one second relay node device. The network node device and the second relay node device are connected via a third transmission path. The second relay node device and the gateway device are connected via a fourth transmission path. One of the first transmission path, the second transmission path, the third transmission path and the fourth transmission path contains an Ethernet path, and another one of the first transmission path, the second transmission path, the third transmission path and the fourth transmission path contains a WiFi path. A second communication performance of the second relay node device is measured. The network node device is selectively connected to the gateway device via the first relay node device or the second relay node device according to the first communication performance and the second communication performance.

According to another embodiment of the present invention, a network node device is provided. The network node device is used for selecting a path connected to a mesh network. The network node device includes a first connection unit, a second connection unit, a measuring unit and a processing unit. The first connection unit is connected to a gateway device via at least one first relay node device. The network node device and the first relay node device are connected via a first transmission path, and the first relay node device and the gateway device are connected via a second transmission path. The second connection unit is connected to a gateway device via at least one second relay node device. The network node device and the second relay node device are connected via a third transmission path, the second relay node device and the gateway device are connected via a fourth transmission path. One of the first transmission path, the second transmission path, the third transmission path and the fourth transmission path contains an Ethernet path, and another one of the first transmission path, the second transmission path, the third transmission path and the fourth transmission path contains a WiFi path. The measuring unit is used for measuring a first communication performance of the first relay node device and a second communication performance of the second relay node device. The processing unit is used for selectively connecting the network node device via the first relay node device or the second relay node device according to the first communication performance and the second communication performance.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 is a schematic diagram of a mesh network according to an embodiment.
FIG. 2 is a flowchart of a network path selection method according to an embodiment.
FIG. 3 is a schematic diagram of a mesh network according to another embodiment.
FIG. 4 is a schematic diagram of a mesh network according to another embodiment.
FIG. 5 is a schematic diagram of a mesh network according to another embodiment.

### DETAILED DESCRIPTION OF THE INVENTION

A mesh network may include various networking technologies, such as the Ethernet technology, the WiFi technology, or the power line communication (PLC) technology. It is not easy for the user to select a best networking method. A number of embodiments explaining how to automatically select the networking method are disclosed below.

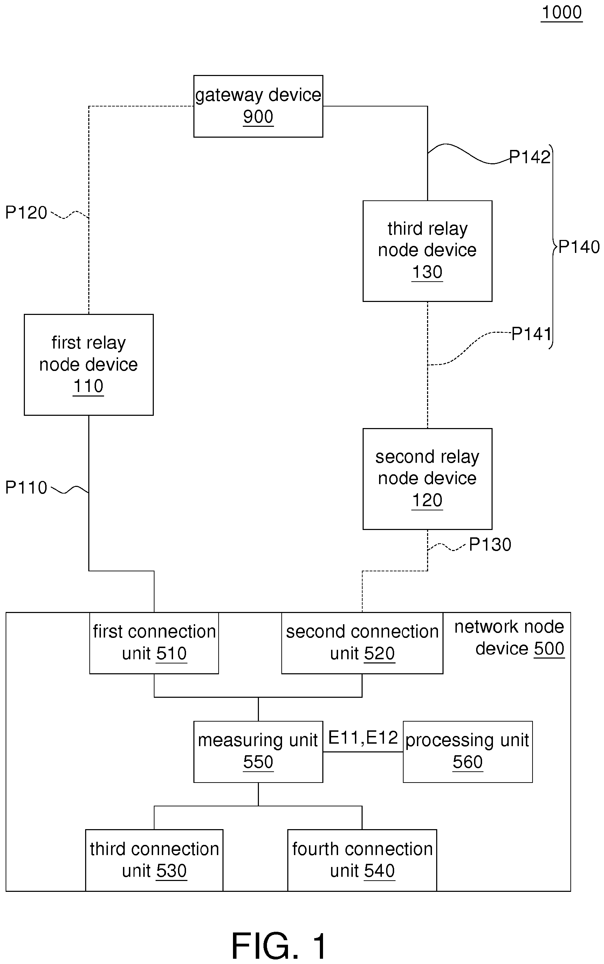

Referring to FIG. 1, a schematic diagram of a mesh network 1000 according to an embodiment is shown. In the mesh network 1000, the nodes can be connected each other by using the Ethernet technology, the WiFi technology, or the PLC technology. As indicated in FIG. 1, the mesh network 1000 includes a network node device 500, a first relay node device 110, a second relay node device 120, a third relay node device 130 and a gateway device 900.

The network node device 500 can be realized by such as a sharing device, or a router. The network node device 500 includes a first connection unit 510, a second connection unit 520, a third connection unit 530, a fourth connection unit 540, a measuring unit 550, and a processing unit 560. The first connection unit 510, the second connection unit 520, the third connection unit 530 and the fourth connection unit 540 are connected to a relay node device, a user equipment, a base station or a gateway device. In the embodiment as indicated in FIG. 1, the first connection unit 510 and the third connection unit 530 can be realized by a RJ45 network connector connected to an Ethernet path via a network. The second connection unit 520 and the fourth connection unit 540 can be realized by an antenna module connected to a wireless network path. The measuring unit 550 is used for measuring the signals. The processing unit 560 is used for performing various processing and judgement procedures. The measuring unit 550 and the processing unit 560 can be realized by a chip, a circuit, a firmware or a non-transitory recording media for storing array codes.

The network node device 500 can be connected to gateway device 900 via the first relay node device 110 or the second relay node device 120. The network node device 500 and the first relay node device 110 are connected via a first transmission path P310. The first relay node device 110 and the gateway device 900 are connected via a second transmission path P320. The network node device 500 and the second relay node device 120 are connected via a third transmission path P330. The second relay node device 120 and the gateway device 900 are connected via a fourth transmission path P340. The fourth transmission path P340 includes a first path segment P141 and a second path segment P142.

In the embodiment as indicated in FIG. 1, the first transmission path P110 is an Ethernet path, the second transmission path P120 is a WiFi path, the third transmission path P130 is a WiFi path, the first path segment P141 of the fourth transmission path P140 is a WiFi path, and the second path segment P142 of the fourth transmission path P140 is an Ethernet path. That is, the network node device 500 can be selectively connected to the gateway device 900 via the first relay node device 110 or the second relay node device 120.

When the network node device 500 is connected to the gateway device 900 via the first relay node device 110, although the network node device 500 is connected to the first relay node device 110 by using the Ethernet technology, the overall communication performance is not necessarily higher because the WiFi technology is used in the rear segment of the second transmission path P120.

On the other hand, When the network node device 500 is connected to the gateway device 900 via the second relay node device 120, although the network node device 500 is connected to the second relay node device 120 by using the WiFi technology, the overall communication performance is not necessarily lower because the Ethernet technology is used in the second path segment P142 of the fourth transmission path P140. Thus, the present embodiment can select the network path to obtain a best path through the steps of the flowchart disclosed below.

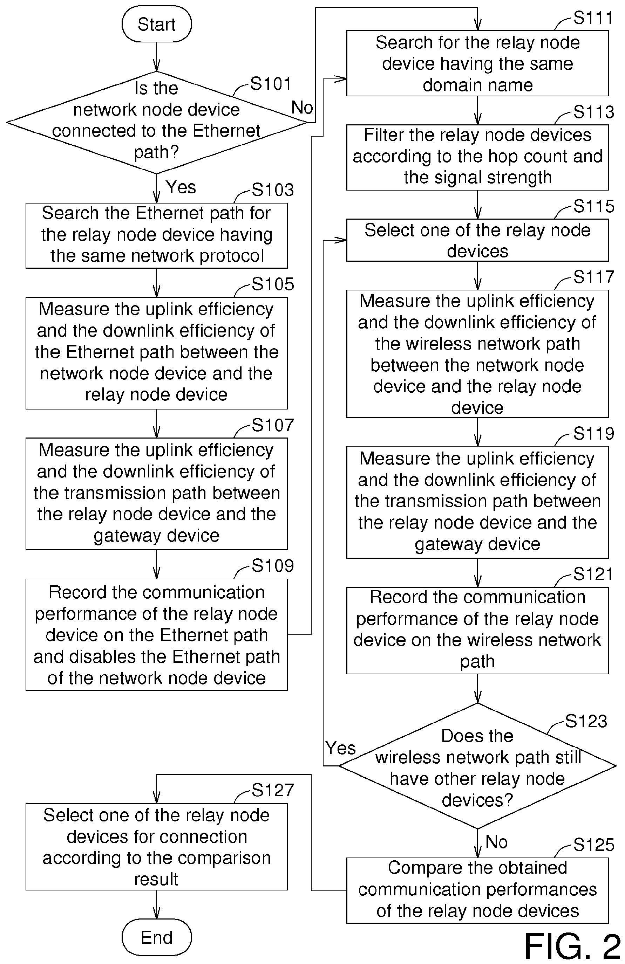

Referring to FIG. 2, a flowchart of a network path selection method according to an embodiment is shown. The execution of each step of the flowchart is described with the mesh network 1000 of FIG. 1. However, the network path selection method is not limited to the mesh network 1000 of FIG. 1.

Firstly, the method begins at step S101, the processing unit 560 determines whether the network node device 500 is connected to an Ethernet path. In the embodiment as indicated in FIG. 1, the network node device 500 is already connected to the Ethernet path (such as the first transmission path P110), then the method proceeds to step S103.

In step S103, the processing unit 560 searches the Ethernet path for the relay node device (such as the first relay node device 110) having the same network protocol and obtains an media access control address (MAC address) and a hop count of the relay node device.

Then, the method proceeds to step S105, the measuring unit 550 measures an uplink efficiency and a downlink efficiency of the Ethernet path (such as the first transmission path P110) between the network node device 500 and the relay node device (such as the first relay node device 110).

Then, the method proceeds to step S107, the measuring unit 550 measures an uplink efficiency and a downlink efficiency of the transmission path (such as the second transmission path P120) between the relay node device (such as the first relay node device 110) and the gateway device 900.

Then, the method proceeds to step S109, the processing unit 560 records a communication performance of the relay node device (such as a first communication performance E11 of the first relay node device 110) on the Ethernet path, and disables the Ethernet path of the network node device 500. For example, the processing unit 560 average two uplink efficiencies and two downlink efficiencies of the first relay node device 110 to obtain the first communication performance E11.

Then, the method proceeds to step S111, the processing unit 560 searches for the relay node device having the same domain name. Normally, the processing unit 560 can find more than one relay node device.

Then, the method proceeds to step S113, the processing unit 560 filters the relay node devices according to the hop count and the signal strength and excludes the relay node devices whose hop counts are too large or signal strengths are too low.

Then, the method proceeds to step S115, the processing unit 560 selects one of the relay node devices (such as the second relay node device 120).

Then, the method proceeds to step S117, the measuring unit 550 measures an uplink efficiency and a downlink efficiency of the wireless network path (such as the third transmission path P130) between the network node device 500 and the relay node device (such as the second relay node device 120).

Then, the method proceeds to step S119, the measuring unit 550 measures an uplink efficiency and a downlink efficiency of the transmission path (such as the fourth transmission path P140) between the relay node device (such as the second relay node device 120) and the gateway device 900.

Then, the method proceeds to step S121, the processing unit 560 records the communication performance of the relay node device (such as a second communication performance E12 of the second relay node device 120) on the wireless network path. The processing unit 560 averages two uplink efficiencies and the two downlink efficiencies of the second relay node device 120 to obtain the second communication performance E12.

Then, the method proceeds to step S123, the processing unit 560 determines whether the wireless network path still has other relay node devices. If so, steps S115-S121 are performed again until the communication performances of all filtered relay node devices on the wireless network path are obtained.

Then, the method proceeds to step S125, the processing unit 560 compares the obtained communication performances (such as the first communication performance E11 and the second communication performance E12) of the relay node devices.

Then, the method proceeds to step S127, the processing unit 560 selects one of the relay node devices for connection according to the comparison result. For example, if the first communication performance E11 is higher than the second communication performance E12, the processing unit 560 selects the first relay node device 110 for connection; if the first communication performance E11 is not higher than the second communication performance E12, the processing unit 560 selects the second relay node device 120 for connection.

According to the above embodiment, the network node device 500 of FIG. 1 can automatically select a better relay node device according to the measurement result, and can further take the transmission in the rear segment into consideration when selecting a best networking method.

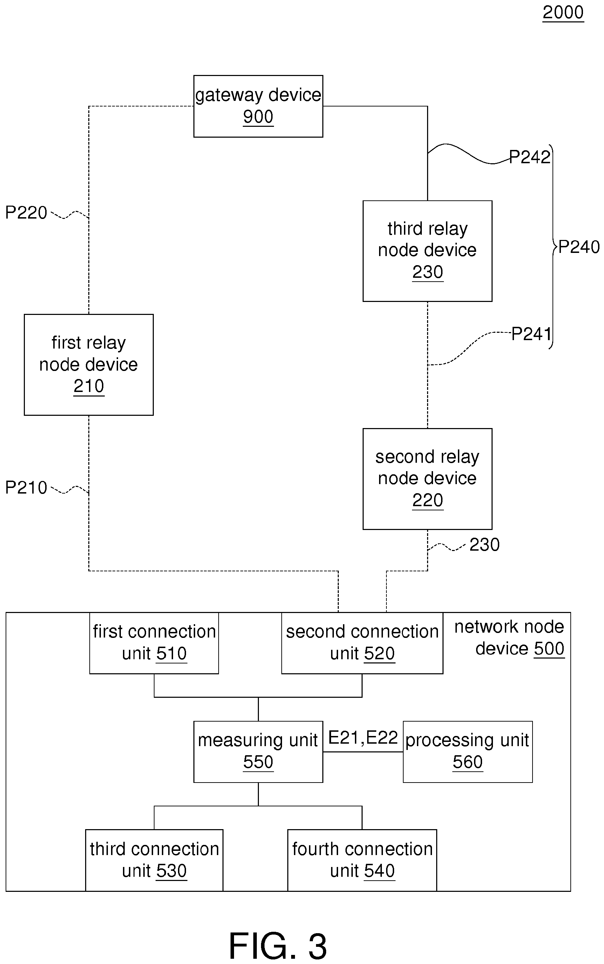

The mesh network 1000 of FIG. 1 is merely one of the possible embodiments of the network path selection method and the network node 500 device using the same of the present disclosure, which can also be used in other embodiments. Referring to FIG. 3, a schematic diagram of a mesh network 2000 according to another embodiment is shown. The mesh network 2000 includes a network node device 500, a first relay node device 210, a second relay node device 220, a third relay node device 230 and a gateway device 900.

The network node device 500 can be connected to the gateway device 900 via the first relay node device 210 or the second relay node device 220. The network node device 500 and the first relay node device 210 are connected via a first transmission path P210. The first relay node device 210 and the gateway device 900 are connected via a second transmission path P220. The network node device 500 and the second relay node device 220 are connected via a third transmission path P230. The second relay node device 220 and the gateway device 900 are connected via a fourth transmission path P240. The fourth transmission path P240 includes a first path segment P241 and a second path segment P242.

In the embodiment as indicated in FIG. 3, the first transmission path P210 is a wireless network path, the second transmission path P220 is a WiFi path, the third transmission path P230 is a WiFi path, the first path segment P241 of the fourth transmission path P240 is a WiFi path, and the second path segment P242 of the fourth transmission path P240 is an Ethernet path. That is, the network node device 500 can be selectively connected to the gateway device 900 via the first relay node device 210 or the second relay node device 220.

When the network node device 500 of FIG. 3 performs the network path selection method, it is determined in step S101 that the network node device 500 is not connected to the Ethernet path, so the method proceeds to step S111.

The network node device 500 of FIG. 3 is connected to the first relay node device 210 and the second relay node device 220 via the wireless network path, so steps S115-S121 need to be performed twice to obtain a first communication performance E21 of the first relay node device 210 and a second communication performance E22 of the second relay node device 220, respectively. The first communication performance E21 not only considers the efficiency of the first transmission path P210, but also considers the efficiency of the second transmission path P220. The second communication performance E22 not only considers the efficiency of the third transmission path P230, but also considers the efficiency of the fourth transmission path P240 using the Ethernet technology.

Lastly, the method proceeds to step S127, the processing unit 560 selects one of the relay node devices for connection according to the comparison result. For example, if the first communication performance E21 is higher than the second communication performance E22, the processing unit 560 selects the first relay node device 210 for connection; if the first communication performance E21 is not higher than the second communication performance E22, the processing unit 560 selects the second relay node device 220 for connection.

In the embodiment as indicated in FIG. 3, although the network node device 500 is connected to the first relay node device 210 and the second relay node device 220 by using the WiFi technology, the Ethernet technology is used in the rear segment of the fourth transmission path P240 of the second relay node device 220, so the overall communication performance can be higher. By using the network path selection method disclosed in the present embodiment, a better path can be selected between the first relay node device 210 and the second relay node device 220.

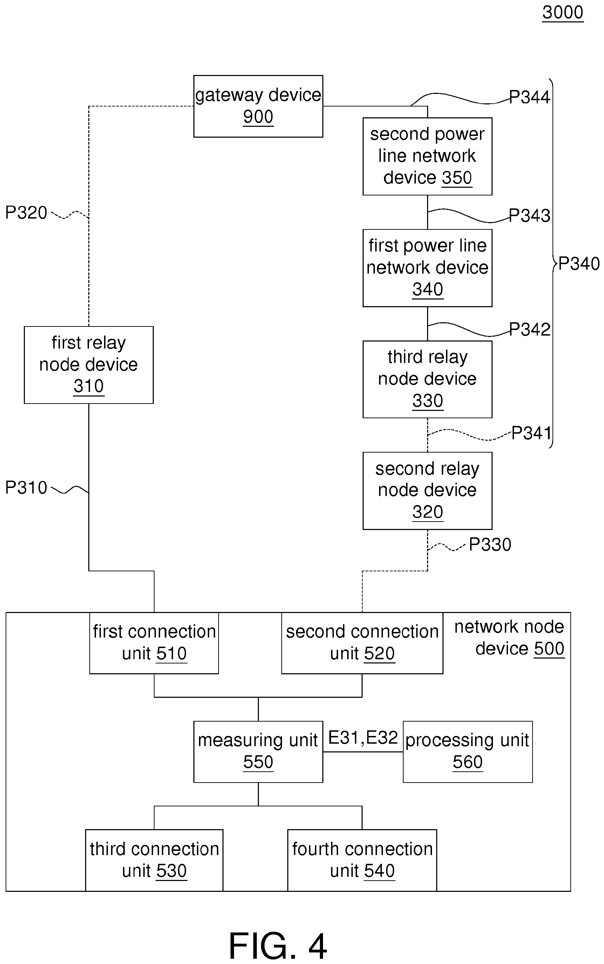

Apart from the embodiments disclosed above, the network path selection method and the network node device 500 using the same of the present disclosure can also be used in other embodiments. Referring to FIG. 4, a schematic diagram of a mesh network 3000 according to another embodiment is shown. The mesh network 3000 includes a network node device 500, a first relay node device 310, a second relay node device 320, a third relay node device 330, a first power line network device 340, a second power line network device 350, and a gateway device 900.

The network node device 500 can be connected to gateway device 900 via the first relay node device 310 or the second relay node device 320. The network node device 500 and the first relay node device 310 are connected via a first transmission path P310. The first relay node device 310 and the gateway device 900 are connected via a second transmission path P320. The network node device 500 and the second relay node device 320 are connected via a third transmission path P330. The second relay node device 320 and the gateway device 900 are connected via a fourth transmission path P340. The fourth transmission path P340 includes a first path segment P341, a second path segment P342, a third path segment P343 and a fourth path segment P344.

In the embodiment as indicated in FIG. 4, the first transmission path P310 is an Ethernet path, the second transmission path P320 is a WiFi path, the third transmission path P330 is a WiFi path, the first path segment P341 of the fourth transmission path P340 is a WiFi path, the second path segment P342 of the fourth transmission path P340 is an Ethernet path, the third path segment P343 of the fourth transmission path P340 is a power line communication (PLC) path, and the fourth path segment P344 of the fourth transmission path P340 is an Ethernet path. That is, the network node device 500 can be selectively connected to the gateway device 900 via the first relay node device 310 or the second relay node device 320.

When the network node device 500 of FIG. 4 performs the network path selection method, it is determined in step S101 that the network node device 500 is connected to the Ethernet path, so steps S103-S109 are firstly performed to obtain a first communication performance E31 of the first relay node device 310. The first communication performance E31 not only considers the efficiency of the first transmission path P310, but also considers the efficiency of the second transmission path P320 using the WiFi technology.

Then, steps S111-S121 are performed to obtain a second communication performance E32 of the second relay node device 320. The second communication performance E32 not only considers the efficiency of the third transmission path P330, but also considers the efficiency of the fourth transmission path P340 using the Ethernet technology and the PLC technology.

Lastly, the method proceeds to step S127, the processing unit 560 selects one of the relay node devices for connection according to the comparison result. For example, if the first communication performance E31 is higher than the second communication performance E32, the processing unit 560 selects the first relay node device 310 for connection; if the first communication performance E31 is not higher than the second communication performance E32, the processing unit 560 selects the second relay node device 320 for connection.

In the embodiment as indicated in FIG. 4, although the network node device 500 is connected to the first relay node device 310 by using the Ethernet technology and is connected to the second relay node device 320 by using the WiFi technology, the Ethernet technology and the PLC technology are used in the rear segment of the fourth transmission path P340 of the second relay node device 320, so the overall communication performance can be higher. By using the network path selection method disclosed in the present embodiment, a better path can be selected between the first relay node device 310 and the second relay node device 320.

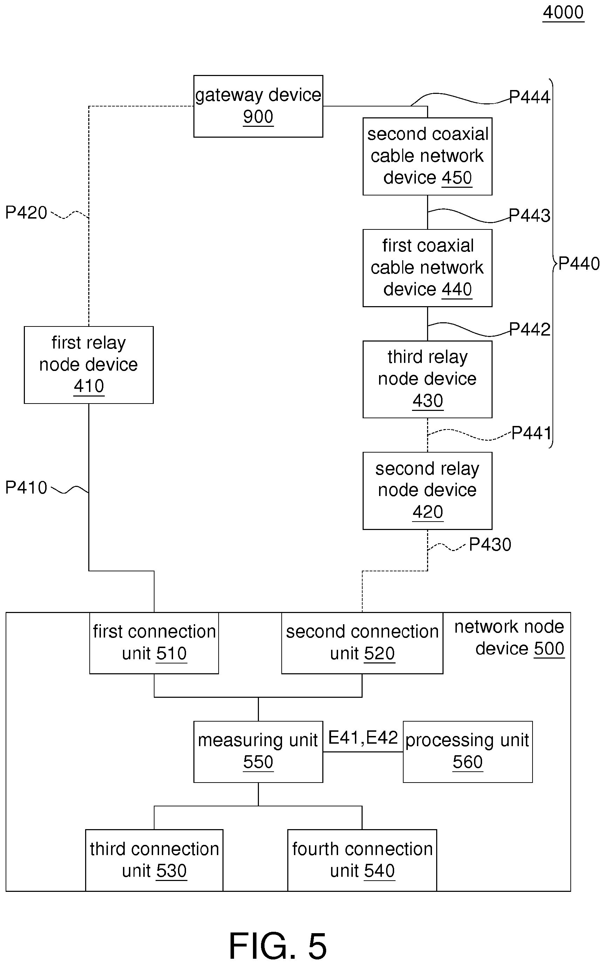

Apart from the embodiments disclosed above, the network path selection method and the network node device 500 using the same of the present disclosure can also be used in other embodiments. Referring to FIG. 5, schematic diagram of a mesh network 4000 according to another embodiment is shown. The mesh network 4000 includes a network node device 500, a first relay node device 410, a second relay node device 420, a third relay node device 430, a first coaxial cable network device 440, a second coaxial cable network device 450, and a gateway device 900.

The network node device 500 can be connected to the gateway device 900 via the first relay node device 410 or the second relay node device 420. The network node device 500 and the first relay node device 410 are connected via a first transmission path P410. The first relay node device 410 and the gateway device 900 are connected via a second transmission path P420. The network node device 500 and the second relay node device 420 are connected via a third transmission path P430. The second relay node device 420 and the gateway device 900 are connected via a fourth transmission path P440. The fourth transmission path P440 includes a first path segment P441, a second path segment P442, a third path segment P443 and a fourth path segment P444.

In the embodiment as indicated in FIG. 5, the first transmission path P410 is an Ethernet path, the second transmission path P420 is a WiFi path, the third transmission path P430 is a WiFi path, the first path segment P441 of the fourth transmission path P440 is a WiFi path, the second path segment P442 of the fourth transmission path P440 is an Ethernet path, the third path segment P443 of the fourth transmission path P440 is a multimedia over coax alliance (MoCA) path, the fourth path segment P444 of the fourth transmission path P440 is an Ethernet path. That is, the network node device 500 can be selectively connected to the gateway device 900 via the first relay node device 410 or the second relay node device 420.

When the network node device 500 of FIG. 5 performs the network path selection method, it is determined in step S101 that the network node device 500 is connected to Ethernet path, so steps S103-S109 are performed firstly to obtain a first communication performance E41 of the first relay node device 410. The first communication performance E41 not only considers the efficiency of the first transmission path P410, but also considers the efficiency of the second transmission path P420 using the WiFi technology.

Then, steps S111-S121 are performed again to obtain a second communication performance E42 of the second relay node device 420. The second communication performance E42 not only considers the efficiency of the third transmission path P430, but also considers the efficiency of the fourth transmission path P440 using the Ethernet technology and the MoCA technology.

Lastly, the method proceeds to step S127, the processing unit 560 selects one of the relay node devices for connection according to the comparison result. For example, if the first communication performance E41 is higher than the second communication performance E42, the processing unit 560 selects the first relay node device 410 for connection; if the first communication performance E41 is not higher than the second communication performance E42, the processing unit 560 selects the second relay node device 420 for connection.

In embodiment as indicated in FIG. 5, although the network node device 500 is connected to the first relay node device 410 by using the Ethernet technology and connected to the second relay node device 420 by using the WiFi technology, the Ethernet technology and the MoCA technology are used in the rear segment of the fourth transmission path P440 of the second relay node device 420, so the overall communication performance could be higher. By using the network path selection method disclosed in the present embodiment, a better path can be selected between the first relay node device 410 and the second relay node device 420.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A network path selection method for selecting a path connected to a mesh network (1000) from a network node device (500), **characterized in that** the network path selection method comprises:
connecting the network node device (500) to a gateway device (900) via at least one first relay node device (110), wherein the network node device (500) and the first relay node device (110) are connected via a first transmission path (P110), and the first relay node device (110) and the gateway device (900) are connected via a second transmission path (P120);
measuring a first communication performance (E11) of the first relay node device (110);
connecting the network node device (500) to the gateway device (900) via at least one second relay node device (120), wherein the network node device (500) and the second relay node device (120) are connected via a third transmission path (P130), the second relay node device (120) and the gateway device (900) are connected via a fourth transmission path (P140), one of the first transmission path (P110), the second transmission path (P120), the third transmission path (P130) and the fourth transmission path (P140) contains an Ethernet path, and another one of the first transmission path (P110), the second transmission path (P120), the third transmission path (P130) and the fourth transmission path (P140) contains a WiFi path;
measuring a second communication performance (E12) of the second relay node device (120); and
selectively connecting the network node device (500) to the gateway device (900) via the first relay node device (110) or the second relay node device (120) according to the first communication performance (E11) and the second communication performance (E12).

2. The network path selection method according to claim 1, wherein another one of the second transmission path and the fourth transmission path contains a power line communication (PLC) path or a multimedia over coax alliance (MoCA) path.

3. The network path selection method according to claim 1, wherein the step of measuring the first communication performance of the first relay node device comprises:
measuring an efficiency of the first transmission path; and
measuring an efficiency of the second transmission path.

4. The network path selection method according to claim 3, wherein the step of measuring the first communication performance of the first relay node device comprises:
measuring an uplink efficiency and a downlink efficiency of the first transmission path; and
measuring an uplink efficiency and a downlink efficiency of the second transmission path.

5. The network path selection method according to claim 1, wherein the quantity of the at least one first relay node device is pleural, all of the first transmission paths are wireless network paths, and the network path selection method further comprises:
filtering the first relay node devices according to a hop count of each of the first relay node devices.

6. The network path selection method according to claim 1, wherein the quantity of the at least one first relay node device is pleural, all of the first transmission paths are wireless network paths, and the network path selection method further comprises:
filtering the first relay node devices according to a signal strength of each of the first relay node devices.

7. A network node device (500) for selecting a path connected to a mesh network (1000), **characterized in that** the network node device (500) comprises:
a first connection unit (510) connected to a gateway device (900) via at least one first relay node device (110), wherein the network node device (500) and the first relay node device (110) are connected via a first transmission path (P110), and the first relay node device (110) and the gateway device (900) are connected via a second transmission path (P120);
a second connection unit (520) connected to the gateway device (900) via at least one second relay node device (120), wherein the network node device (500) and the second relay node device (120) are connected via a third transmission path (P130), the second relay node device (120) and the gateway device (900) are connected via a fourth transmission path (P140), one of the first transmission path (P110), the second transmission path (P120), the third transmission path (P130) and the fourth transmission path (P140) contains an Ethernet path, and another one of the first transmission path (P110), the second transmission path (P120), the third transmission path (P130) and the fourth transmission path (P140) contains a WiFi path;
a measuring unit (550) used for measuring a first communication performance (E11) of the first relay node device (110) and a second communication performance (E12) of the second relay node device (120); and
a processing unit (560) used for selectively connecting the network node device (500) via the first relay node device (110) or the second relay node device (120) according to the first communication performance (E11) and the second communication performance (E12).

8. The network node device according to claim 7, wherein another one of the second transmission path and the fourth transmission path contains a power line communication (PLC) path or a or a multimedia over coax alliance (MoCA) path.

9. The network node device according to claim 7, wherein the measuring unit is used for measuring an efficiency of the first transmission path and an efficiency of the second transmission path to obtain a first communication performance.

10. The network node device according to claim 9, wherein the measuring unit is used for measuring an uplink efficiency and a downlink efficiency of the first transmission path and an uplink efficiency and a downlink efficiency of the second transmission path to obtain a second communication performance.

11. The network node device according to claim 9, wherein the quantity of the at least one first relay node device is pleural, all of the first transmission paths are wireless network paths, and the processing unit further filters the first relay node devices according to a hop count of each of the first relay node devices.

12. The network node device according to claim 9, wherein the quantity of the at least one first relay node device is pleural, all of the first transmission paths are wireless network paths, and the processing unit further filters the first relay node devices according to a signal strength of each of the first relay node devices.
